# NEUE EUROPÄISCHE PATENTSCHRIFT

(11) **EP 0 167 652 B2**
(45) Veröffentlichungstag und Bekanntmachung des Hinweises auf die Entscheidung über den Einspruch: **09.08.1995**
(45) Hinweis auf die Patenterteilung: 31.05.1989
(21) Anmeldenummer: 84108179.7
(22) Anmeldetag: 12.07.1984
(51) Int. Cl.: F02P 5/04

(54) **Steuergerät für Kraftfahrzeuge**
Control apparatus for a vehicle
Appareil de commande pour véhicule à moteur

(43) Veröffentlichungstag der Anmeldung: 15.01.1986
(73) Patentinhaber: ROBERT BOSCH GMBH, 70442 Stuttgart (DE)
(72) Erfinder: Becker, Rüdiger, Dipl.-Ing., D-7141 Murr (DE); Clement, Albrecht, Dipl.-Ing., D-7014 Kornwestheim (DE); Virgilio, Gustav, D-7057 Winnenden (DE); Weller, Hugo, D-7141 Oberriexingen (DE)

(56) Entgegenhaltungen:
- DE-A- 3 112 023
- DE-A- 3 143 554
- DE-C- 3 028 941
- GB-A- 2 069 603
- US-A- 4 377 996
- "Motronic", Januar 1983

## Beschreibung

### Stand der Technik

Die Erfindung geht aus von einem Steuergerat für Kraftfahrzeuge nach der Gattung des Hauptanspruchs.

Aus der Druckschrift "Motronic-Kombiniertes Zünd- und Benzineinspritzsystem", Robert Bosch GmbH, Januar 1983, ist bereits ein Steuergerät für Kraftfahrzeuge bekannt, das während des Beschleunigens zusätzlich Kraftstoff zumißt und den Zündwinkel verändert.

Öffnet die Drosselklappe sich plötzlich bei konstanter Drehzahl, so magert das Luft-Kraftstoff-Gemisch kurzzeitig ab. Es bedarf einer höheren Kaftstoffanreicherung, um ein gutes Übergangsverhalten zu erzielen. Das Steuergerät erkennt aus der Differenz des Lastsignales, ob ein Beschleunigungsvorgang vorliegt und löst in diesem Falle eine Beschleunigungsanreicherung aus. Dabei steuert es das Luft-Kraftstoff-Gemisch auf Lambda = 0,9 für maximales Drehmoment. Damit läßt sich ein "Beschleunigungsloch" vermeiden. Während der Warmlaufphase reicht diese Beschleunigungsanreicherung nicht aus. Bei kaltem Motor ist eine stärkere Anreicherung erforderlich wegen der schlechten Gemischaufbereitung und eventueller Saugrohrbenetzung. Der temperaturabhängige Anreicherungsfaktor wird zeitlich annähernd linear abgeregelt, wobei die Steigung von der Temperatur unabhängig ist.

Auch in der Beschleunigungsphase paßt das Steuergerät den Zündwinkel jeweils zwischen zwei Zündzeitpunkten aus den vorliegenden Informationen Last und Drehzahl an. Wird eine bestimmte Laständerung überschritten, so berechnet das Steuergerät zusätzlich eine feste additive Zündverstellung, die nach den Auslösen zeitlich geregelt wird. Mit dieser Funktion verhindert das Steuergerät das Beschleunigungsklopfen, das bei normaler Zündvinkelverstellung für einige Zyklen bei starker Beschleunigung in einigen Motoren auftritt. Zugleich verringern sich die beim Beschleunigen auftretenden hohe Stickoxyd-Anteile im Abgas.

In den Fällen, in denen ein sprungartiges Ändern des Zündvinkels ein Verschlechtern des Fahrverhaltens (Ruck) bringt, wird diese Änderung zeitlich langsam durchgeführt und damit der Ruck vermindert. In den Fällen, in denen eine rasche Änderung zwingend erforderlich ist, z. B. beim Übergang von Teillast von Vollast, um Klopfen zu vermeiden, läßt das Steuergerät eine schnelle Änderung zu. Die genannten Nachteile werden durch die Kennzeichnenden Merkmale des Hauptanspruchs beseiteigt.

### Vorteile der Erfindung

Das erfindungsgemäße Steuergerät nach der Gattung des Hauptanspruches hat demgegenüber den Vorteil, daß durch die betriebsparameterabhängige Weite der Zündwinkelverstellung ein gutes Fahrverhalten auch bei verschiedenen Laständerungsgeschwindigkeiten erreicht wird, d.h., daß bei kleiner Laständerung eine kleine Zündwinkelverstellung und bei großer Laständerung eine entsprechend große Zündwinkelverstellung ausgelöst wird. Dadurch wird ein Klopfen verhindert, ohne sich zu sehr von Betriebsoptimum bzw. der Klopfgrenze zu entfernen, wodurch auch ein besseres Abgasverhalten erzielt wird. Die Weite der Zündwinkelverstellung ist weiterhin von der Drehzahl oder kann allgemein vom Betriebspunkt im Drehzahl-Last-Kennfeld des Steuergerätes abhängig gemacht werden, so daß sich auch bei unterschiedlichen Drehzahlen ein weiches Fahrverhalten bei der Beschleunigung ergibt.

In den Unteransprüchen sind weitere vorteilhafte Ausgestaltungen des erfindungsgemäßen Steuergerätes angegeben. Besonders vorteilhaft ist es, eine mehrfache Auslösung der Zündwinkelverstellung zuzulassen. Dadurch wird bei steigender Laständerung ein Klopfen verhindert, ohne daß dadurch der Zündwinkel zu weit zurückgenommen werden muß. Eine Berücksichtigung der Motortemperatur für die Weite der Zündwinkelverstellung berücksichtigt die steigende Klopfneigung des Motors bei steigender Temperatur.

### Zeichnung

Ein Ausführungsbeispiel der Erfindung ist in der Zeichnung dargestellt und in der nachfolgenden Beschreibung näher erläutert.

Figur 1 zeigt ein Blockdiagramm des Motors mit einem angeschlossenen Steuergerät.

Figur 2 zeigt ein Funktionsdiagramm zur Erläuterung der Wirkungsweise.

### Beschreibung des Ausführungsbeispieles

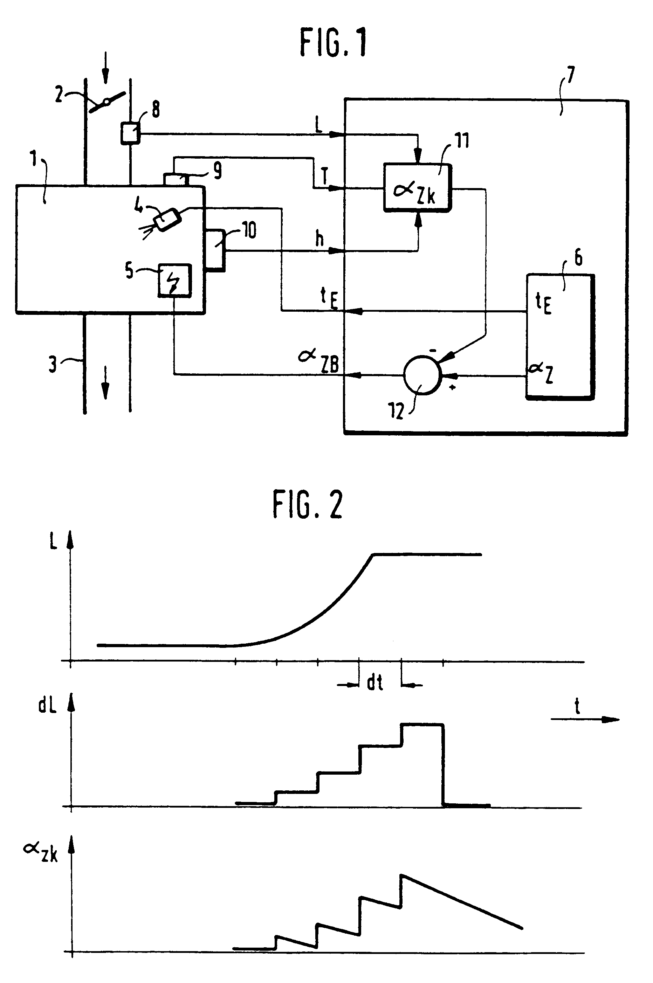

Figur 1 zeigt einen Motor 1 eines Kraftfahrzeugs, mit einem Einlaßbereich 2 und einem Auslaßbereich 3 des Motors. Ein Steuergerät steuert ein Einspritzaggregat 4 sowie ein Zündaggregat 5 des Motors 1 an. Unterhalb der Drosselklappe im Einlaßbereich 3 erfaßt ein Lastsensor 8 den Lastzustand des Motors 1 und gibt ein Lastsignal L an das Steuergerät 7 ab. Ein Temperatursensor 9 erfaßt die Motortemperatur T und ein Drehzahlsensor 10 an der Kurbelwelle des Motors 1 liefert ein Drehzahlsignal n an das Steuergerät 7.

Zur Vereinfachung der Darstellung ist in Figur 1 das Zusammenwirken von Motor 1 und Steuergerät 7 nur sehr schematisch dargestellt, da dem Fachmanne die Erfassung der Betriebsparameter des Motors 1 sowie die Ausführung des Einspritzaggregates 4 und des Zündaggregates 5 sowie deren Ansteuerung durch das Steuergerät 7 bekannt ist.

Eine Motorsteuerung 6 ist im Steuergerät 7 gesondert dargestellt. Die Motorsteuerung 6 berechnet eine Einspritzzeit t_{E} sowie einen Zündwinkel a_{Z} Eine solche Motorsteuerung ist dem Fachmanne als Stand der Technik bekannt und zur Vereinfachung der Darstellung ebenfalls nicht weiter dargestellt.

Eine Zündwinkelkorrektur 11 berechnet einen Korrekturzündwinkel a_{Zk}, der in einer Summierstelle 12 vom Zündwinkel a_{Z} der Motorsteuerung 6 subtrahiert wird, um den für die Beschleunigung gültigen Zündwinkel a_{ZB} zu erhalten, der als Steuergröße vom Steuergerät 7 dem Zündaggregat 5 zugeführt wird.

Die Zündwinkelkorrektur 11, die Motorsteuerung 6 und die Summierstelle 12 sind im Steuergerät 7 weitgehend in der Software realisiert. Die Hardware des Steuergerätes 7 weist Empfangs- und Treiberschaltungen für verschiedene Motorsignale, wie etwa die Empfangsschaltungen für Lastsignal L. Temperatursignal T und Drehzahl n und Treiberschaltungen zur Ansteuerung des Einspritzaggregates 4 und des Zündaggregates 5, sowie die Hardware-Struktur eines Rechners zur Verarbeitung der in den Signalen enthaltenen Information auf. Die Struktur des Steuergerätes 7 in Figur 1 stellt somit den funktionellen und nicht den schaltungstechnischen Zusammenhang der erfindungsgemäßen Zündwinkelverstellung in diesem Ausführungsbeispiel dar.

Figur 2 zeigt ein Lastsignal L über einer Zeit t, wobei das Lastsignal L eine steigende Änderungsgeschwindigkeit besitzt. Das Steuergerät 7 fragt in Zeitabständen dt den Zustand des Lastsignales L ab. Unterhalb des Lastsignales L ist in Figur 2 ein Signal dL aufgetragen, das der ersten zeitlichen Ableitung des abgetasteten Lastsignales L entspricht. Das Signal dL ist also ein Maß für die Laständerungsgeschwindigkeit. Unterhalb des Signales dL in Figur 2 ist ein zugehöriger Korrekturzündwinkel a_{Zk} aufgetragen, wie er in der Zündwinkelkorrektur 11 der Figur 1 berechnet wird. Hierzu wird das Signal dL übernommen und nach jeder positiven Flanke zeitlich annähernd linear herabgeregelt. Gegenüber dem Stand der Technik ist hier jedoch eine Mehrfachauslösung gezeigt. d.h. es wird eine Zündwinkelkorrektur durchgeführt, obwohl eine vorherige Zündwinkelkorrektur noch nicht vollständig heruntergeregelt ist. Die Zündwinkelkorrektur geschieht somit dynamisch, und nicht nur einmal in Abhängigkeit vom Überschreiten einer festen Lastschwelle.

## Patentansprüche

1. Steuergerät für Kraftfahrzeuge, das zumindest die Zündung der Brennkraftmaschine steuert, wobei bei zunehmender Last eine zusätzliche Zündzeitpunktverstellung nach spät erfolgt, die nach dem Auslösen zeitlich abgeregelt wird, dadurch gekennzeichnet, daß die Weite der zusätzlichen Zündzeitpunktverstellung bei zunehmenden Last von der Laständerung und von der Drehzahl abhängig ist, daß das Lastsignal in vorgegebenen Zeitabständen abgefragt wird, und daß unabhängig vom Abregelvorgang bei jeder Zeitlichen Abtastung der Last, wenn eine Laständerung aufgetreten ist, eine weitere zusätzliche laständerungsabhängige und drehzahlabhängige Zündzeitpunktverstellung erfolgt.

2. Steuergerät nach Anspruch 1, dadurch gekennzeichnet, daß die Weite der Zündzeitpunktverstellung zusätzlich abhängig von der Motortemperatur ist.

## Claims

1. Control apparatus for motor vehicles, which controls at least the ignition of the internal combustion engine, an additional retardation of the ignition timing adjustment taking place with increasing load, which retardation is regulated downwards with time after the triggering, characterized in that the width of the additional ignition timing adjustment with increasing load is dependent on the load variation and on the speed, in that the load signal is interrogated in prescribed time intervals, and in that if a load variation has occurred a further additional ignition timing adjustment dependent on the load variation and speed takes place independently of the process of downward regulation in the case of each temporal sampling of the load.

2. Control apparatus according to Claim 1, characterized in that the width of the ignition timing adjustment is additionally dependent on the engine temperature.

## Revendications

1. Appareil de commande pour véhicules automobile, qui commande au moins l'allumage du moteur à combustion interne avec, lorsque la charge croît, un réglage supplémentaire de l'instant d'allumage dans le sens du retard à l'allumage, ce réglage supplémentaire étant supprimé dans le temps, après le déclenchement, caractérisé en ce que l'ampleur du réglage supplémentaire de l'instant d'allumage, en charge croissante, dépend de la modification de charge et de la vitesse de rotation et le signal de charge est demandé à des intervalles de temps prédéterminés, et, indépendamment du processus de suppression de ce réglage, et à chaque instant de détection de charge, lorsqu'il y a eu une modification de la charge, il se produit un autre réglage du point d'allumage en fonction de la modification de la charge et de la vitesse de rotation.

2. Appareil de commande selon la revendication 1, caractérisé en ce que l'ampleur du réglage de l'instant d'allumage est en outre dépendante de la température du moteur.
